# EUROPEAN PATENT APPLICATION

(11) **EP 1 701 102 A2**
(43) Date of publication of application: **13.09.2006**
(21) Application number: 05010769.7
(22) Date of filing: 18.05.2005
(51) Int. Cl.: F24F 7/013

(54) **Ventilating system**

(30) Priority: 15.02.2005 KR 2005012321
(71) Applicant: LG ELECTRONICS INC., Seoul (KR)
(72) Inventor: Choi, Keun Hyoung, Dongjak-gu Seoul (KR); Kim, Jeong Yong, Guro-gu Seoul (KR); Choi, Ho Seon, Dongjak-gu, Seoul (KR)
(74) Representative: TER MEER - STEINMEISTER & PARTNER GbR

(57) **Abstract**

Ventilating system including a main flow passage in communication with an outside of a room, for supplying outdoor air to the room, or discharging room air to an outside of the room, at least one case having an inlet and an outlet in communication with the room, and connected to the main flow passage, an air supply flow passage connected to the main flow passage for supplying outdoor air to the room through the outlet, an air circulating flow passage connecting the room to the air supply flow passage in the case, for drawing room air through the inlet and supplying the room air to the room again, and a fan unit in the case for supplying the outdoor air introduced into the case through the air supply flow passage to the room, or supplying the room air introduced into the case through the air circulating flow passage to the room, again.

## Description

### BACKGROUND OF THE INVENTION

### Field of the Invention

The present invention relates to ventilating systems, and more particularly, to a compact ventilating system with an air purifying function.

### Discussion of the Related Art

Air in a closed room is gradually polluted as time passes-by due to respiration of people in the room. Therefore, it is required to replace the polluted room air with fresh outdoor air, for which the ventilating system is provided.

In general, the ventilating system is installed in a ceiling in the room. Accordingly, an adequate space is required for installation of the ventilating system, to require a great height between floors of adjacent flats, i.e., a flat height, which impairs spatial efficiency and economy of a building.

In the meantime, recently, for improving a living condition of the room, not only the ventilating system, but also an air cleaner, are started to be used, for cleaning room air. In this case, an expense for buying the air cleaner is required, additionally. Moreover, the air cleaner, placed on a floor of the room in use, is difficult to remove dust suspended in the air effectively, and liable to cause accidents caused by negligence of safety, and fault because a baby or a child can make an easy access thereto. Furthermore, if the ventilating system and the air cleaner are provided separately, it is difficult to provide a comfortable room environment in a case outdoor air introduced into the room by the ventilating system is polluted because polluted outdoor air can be supplied to the room directly when the room is ventilated.

### SUMMARY OF THE INVENTION

Accordingly, the present invention is directed to a ventilating system that substantially obviates one or more problems due to limitations and disadvantages of the related art.

An object of the present invention is to provide a ventilating system which requires no increase of a flat height of a building for installation of the ventilating system.

Another object of the present invention is to provide a ventilating system which enables, not only cleaning of room air, but also cleaning of outdoor air supplied to the room during ventilation.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a ventilating system includes a main flow passage in communication with an outside of a room, for supplying outdoor air to the room, or discharging room air to an outside of the room, at least one case having an inlet and an outlet in communication with the room, and connected to the main flow passage, an air supply flow passage connected to the main flow passage for supplying outdoor air to the room through the outlet, an air circulating flow passage connecting the room to the air supply flow passage in the case, for drawing room air through the inlet and supplying the room air to the room again, and a fan unit in the case for supplying the outdoor air introduced into the case through the air supply flow passage to the room, or supplying the room air introduced into the case through the air circulating flow passage to the room, again.

The case has a shape of a thin hexahedron, and is installed at a corner of a ceiling. The case has one side and a rear in close contact with room walls at a corner of the room, and the other side and a front exposed to the room provided with the outlet.

The case is in the room, and the main flow passage is in the ceiling in a state the main flow passage is connected to an upper surface of the case. The main flow passage is provided to a corner of the ceiling in a state the main flow passage passes through the wall, and the case is in the room in a state the case is connected to an underside of the main flow passage.

Two or more than two cases are provided, and each of the cases is provided in rooms different from each other.

The main flow passage includes a first port at a portion the air supply flow passage starts in the case, and a main duct connected to the first port for guiding outdoor air to the air supply flow passage. The main duct includes an elbow passed through the corner of the room or an inside of the ceiling opposite to the corner.

In the meantime, the case includes a first inlet in an underside surface of the case for drawing room air for re-supplying to the room, a second inlet in an underside surface of the case for drawing room air to discharge to an outside of the room, outlets in the front and the other side of the case for discharging air introduced into the case to the room, and an air guide for separating the outdoor air being introduced into the room from room air being discharged to an outside of the room.

The main flow passage includes a first port in an upper surface of the case, an air supply duct connected to the first port for guiding outdoor air to the case, a second port in the upper surface of the case, and an air discharge duct connected to the second port for guiding room air introduced into the case to an outside of the room.

The ventilating system further includes an air discharge flow passage in the case having one end connected to the air discharge duct for guiding the room air introduced into the second inlet to the air discharge duct.

The ventilating system further includes an air supply damper provided to the air supply duct for selective cut off of an air flow through the air supply duct, and an air discharge damper provided to the air discharge duct for selective cut off of an air flow through the air discharge duct.

Preferably, the fan unit includes a turbofan for drawing outdoor air and polluted room air in an axial direction and discharging in a radial direction.

The ventilating system further includes a louver in the air circulating flow passage for opening/closing the inlet.

In the meantime, the ventilating system may further include a 3-way discharge ventilating device connected to the main flow passage for making air supply and aid discharge at the same time.

The 3-way discharge ventilating device includes a case connected to the other end of the main flow passage, and provided in other room, having outlets in a front and opposite sides, and a first inlet and a second inlet in an underside for drawing the room air, an air supply flow passage in the case connected to the main flow passage for supplying outdoor air to the room through the outlet, an air discharge flow passage in the case, and connected to the main flow passage, for discharging room air to an outside of room through an inlet, an air circulating flow passage in the case for re-supplying room air to the room, and a fan unit in the case for forced suction of the outdoor air and the room air. The main flow passage includes an air supply duct connected to the air supply flow passage, and an air discharge duct connected to the air discharge flow passage.

The ventilating system may further include an air cleaning member in the case for cleaning room air or outdoor air introduced into the case. The air cleaning member includes a high efficiency dust filter, photo-catalyst, and active carbon in the case. The high efficiency dust filter includes an HEPA (High Efficiency Particulate Arrestor) which can filter microbes and particles of a size equal to or greater than 0.3 µm. The high efficiency dust filter includes an ULPA (Ultra Low Penetration Absolute) which can filter microbes and particles of a 0.01 ~ 0.1 µm size.

In another aspect of the present invention, a ventilating system includes a main duct having an air supply duct for supplying outdoor air to a room, and an air discharging duct for discharging room air to an outside of the room, at least one case in the room connected to the main duct, the case having a first inlet for drawing the room air for re-supplying the room air to the room, a second inlet for drawing the room air for discharging the room air to an outside of the room, and an outlet for discharging the outdoor air to the room, an air guide in the case for separating the outdoor air supplied to the case, and the room air drawn into the case, and a fan unit in the case for supplying the outdoor air to the room, or introducing room air into the case, and therefrom, to the room.

The ventilating system may further include a heat exchanger provided to an outdoor portion where the air supply duct and the air discharge duct cross for making the outdoor air being supplied to the room and the room air being discharged to an outside of the room to heat exchange, indirectly.

The ventilating system may further include an air supply fan in the air supply duct for drawing the outdoor air. The ventilating system may further include an air discharge fan in the air discharge duct for discharging the room air.

The case includes an air supply flow passage in the case connected to the air supply duct for guiding the outdoor air to the outlet through an underside of the fan unit, an air circulating flow passage in the case connected to the air supply flow passage for drawing the room air into the case through the first inlet and supplying to the room again, and an air discharge flow passage in the case connected to the air discharge duct for drawing the room air through the second inlet and guiding the room air to the air discharge duct. The ventilating system may further include an air cleaning member in the case for cleaning the room air, or the outdoor air introduced into the case.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a perspective view of a ventilating system in accordance with a first preferred embodiment of the present invention in a state installed in a room;

FIG. 2 illustrates a perspective view of an exterior of the ventilating system in FIG. 1;

FIG. 3 illustrates a section of a variation of an inside structure of the ventilating system in FIG 1;

FIGS. 4 to 6 illustrate perspective views of examples of installation of the ventilating system in accordance with a first preferred embodiment of the present invention;

FIG 7 illustrates a section of another variation of an inside structure of the ventilating system in FIG. 1, showing an air flow when the ventilating system is operating in a first operation mode;

FIG. 8 illustrates a section of the ventilating system in FIG. 7, showing an air flow when the ventilating system is operating in a second operation mode;

FIG. 9 illustrates a perspective view of another variation the ventilating system in FIG. 1;

FIG. 10 illustrates a section of the 3-way discharge ventilating device in FIG. 9; and

FIG. 11 illustrates a section of the ventilating system in accordance with a second preferred embodiment of the present invention, showing an air flow when the ventilating system is operating in a second operation mode.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

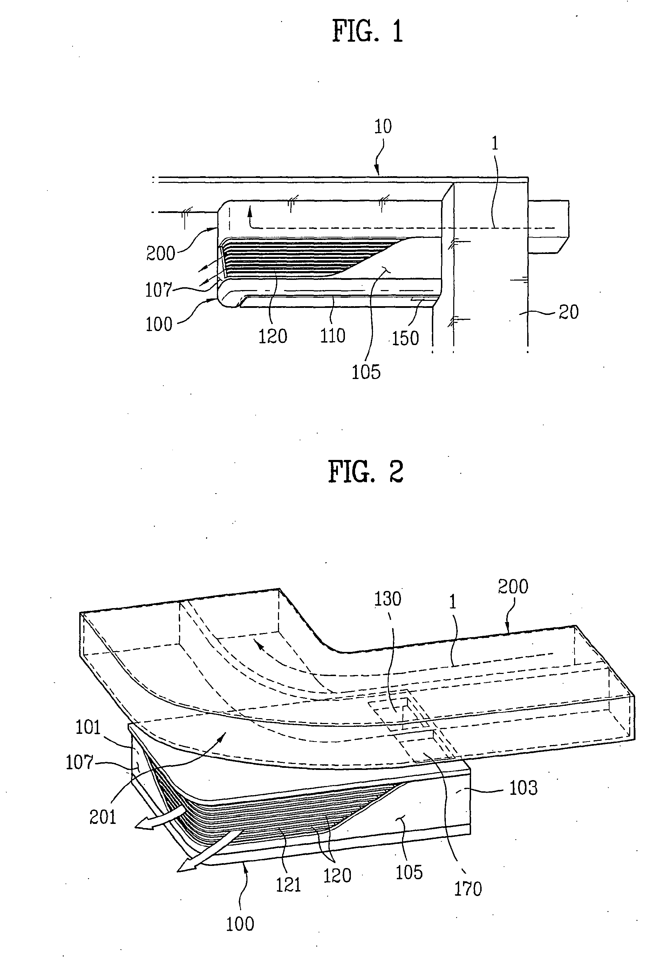

FIGS. 1 to 11 illustrate ventilating systems in accordance with a first preferred embodiment of the present invention.

Referring to FIGS. 1 to 11, the ventilating system has a case 100 installed, for an example, at a corner of a ceiling 10 of a room as shown in FIG. 1. The case 100 has a rear 101 and a first side 103 connected to each other and in close contact with a corner of a room wall 20, and a front 105 and a second side 107 facing the room.

The case 100 has at least one first inlet 110, second inlet 150, and outlet 120 in communication with the room. As shown in FIG. 1, the first inlet 110 is provided to a front side of an underside of the case 100, and the second inlet 150 is provided to a rear of the underside of the case 100, and, as shown in FIG. 2, the outlet 120 is provided in a state portions of the outlet 120 on a front 105 side and a second side 107, both of which face the room, are connected.

At least one case 100 may be installed in each room for introduction of outdoor air or discharge of room air through a main flow passage.

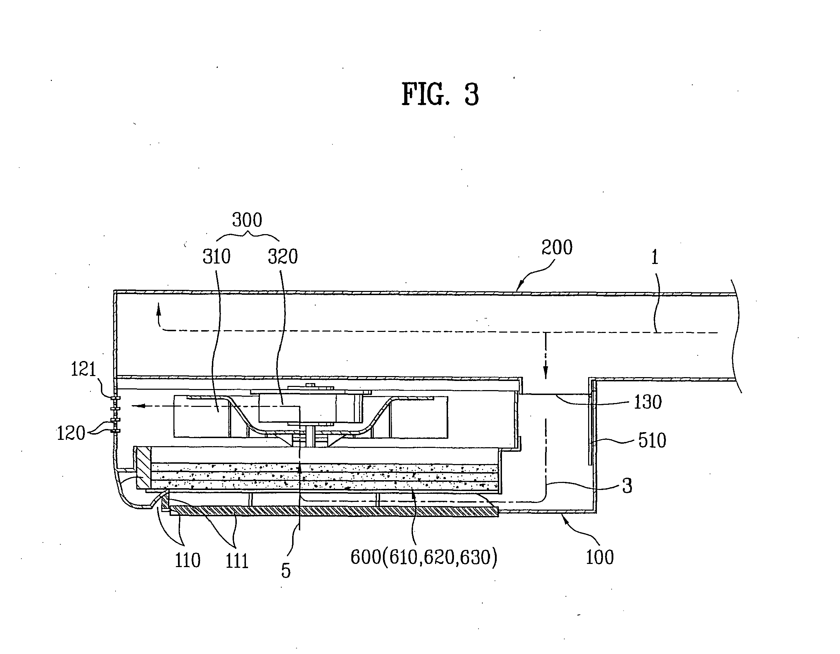

It is preferable that the second inlet 150 is provided, selectively. For an example, as shown in FIG 3, if air is only supplied without discharging room air to an outside of the room, no second inlet 150 is required.

The ventilating system includes a main flow passage 1 in communication with an outside of the room, for supplying outdoor air to the room, or discharging room air to an outside of the room, and an air supply flow passage 3 connected to the main flow passage 1 for supplying outdoor air to the room through the outlet 120, wherein the main flow passage 1 passes through an upper portion of the case 100, and the air supply flow passage 3 passes through an inside of the case 100. The passages will be described in detail with reference to above drawings.

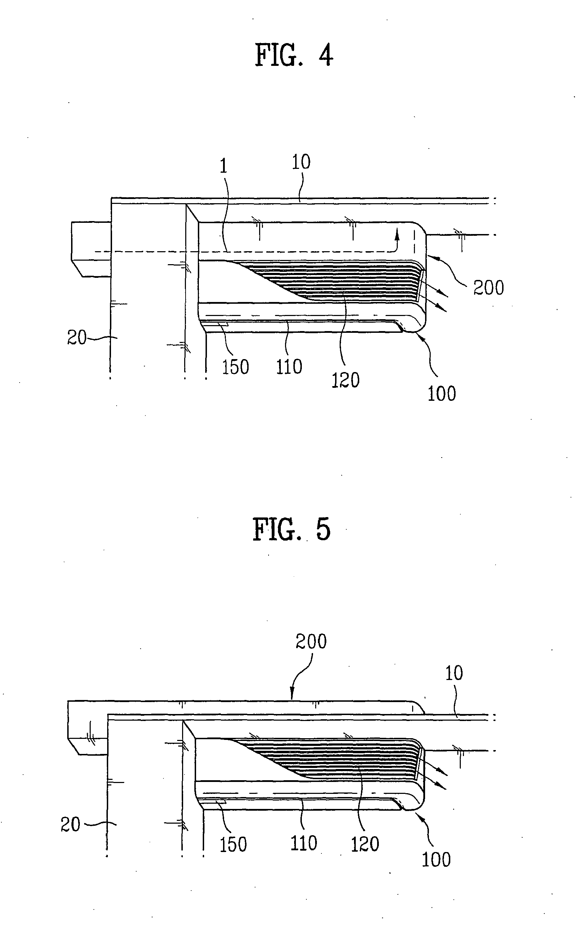

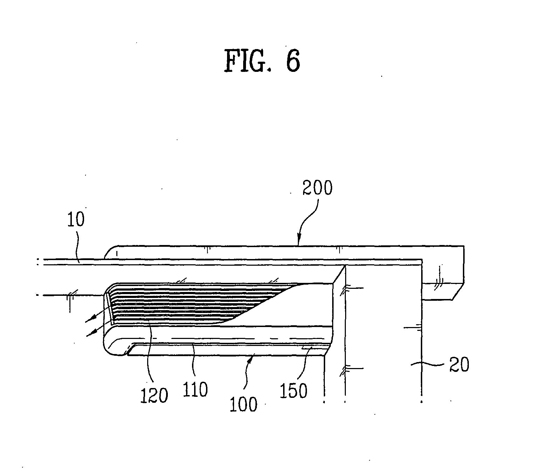

The main flow passage 1 makes an outside of the room and the cases 100 in communication. The main flow passage 1 is connected to a top of the case 100. For an example, as shown in FIGS. 1 and 4, the case 100 is provided to the room, and the main flow passage 1 may be provided to the room together with the case 100. Or, alternatively, as shown in FIGS. 5 and 6, if there is a surplus space in the ceiling 10, the case 100 may be provided to the room, and the main flow passage 1 may be provided to an inside of the ceiling 10. This is for providing the ventilating system suitable to a structure of the building taking the structure of the building into account at the time of installation of the ventilating system. For an example, if there is a surplus space in the ceiling without increasing the height of the flat of the building, the main flow passage 1 is installed inside of the ceiling 10, while the case 100 is installed in the room, and opposite to this, if there is no surplus space inside of the ceiling 10, the main flow passage 1 and the case 100 are installed in the room, for reducing the height of the flat.

Taking operation conditions of the ventilating system into account, the main flow passage 1 may have a structure in which only the air supply is made or a structure in which both the air supply and air discharge are made at the same time.

Referring to FIG. 3, in a case of the structure in which only the air supply is made, the main flow passage 1 includes a first port 130 provided to the case 100, and a main duct 200 connected to the first port 130 for guiding outdoor air to the air supply flow passage 3. The first port 130 is provided to one side of an upper surface of the case 100. This is because the first port 130 may be provided to a left side or a right side of the upper surface of the case 100, taking a wall structure 20 of the room where the ventilating system is installed.

Referring to FIG. 2, the main duct 200 passes through a corner of the room or the inside of the ceiling 10 in the vicinity of the corner, and includes an elbow 201 having at least one of the cases 100 connected thereto. The elbow 201 connects respective main ducts 200, for an example, if a case (not shown) provided to other room is arranged perpendicular to the case 100 of the room.

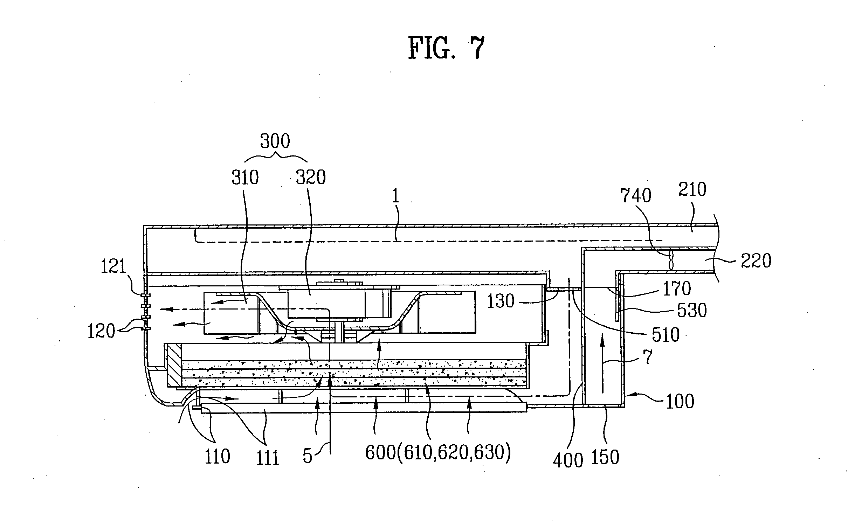

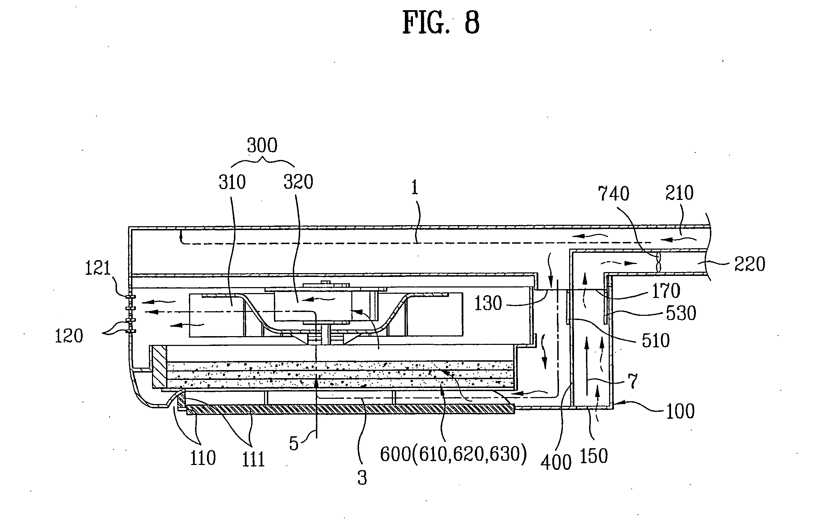

In the meantime, referring to FIGS. 7 and 8, the main flow passage 1, provided to make air supply and air discharge at the same time, includes a first port 130 provided to the upper surface of the case 100, an air supply duct 210 connected to the first port 130 for guiding outdoor air to the case 100, a second port 170 provided to an upper surface of the case 100, and a discharge duct 220 connected to the second port 170 for guiding room air introduced into the case 100 to an outside of the room. It is preferable that a discharge flow passage 3 connected to the second port 170 is provided to inside of the case 100, and there is a second inlet 150 in an underside surface of the case 100, for introducing room air thereto and discharging to an outside of the room. It is preferable that an air discharge fan 740 is provided in the discharge duct 220 for drawing room air and discharging to an outside of the room. It is more preferable that the second port 170 is provided with an air discharge damper 530 for selective cut off of the air flowing into the case 100.

The air supply flow passage 3 is connected to the main flow passage 1 for supplying outdoor air to the room through the outlet 120, and, for an example, starts from a connection portion of the main flow passage 1 and the case 100 and connected to the outlet 120 via the inside of the case 100. That is, in the course of introduction of outdoor air into the room, the outdoor air, introduced into, and is flowing through the main flow passage 1, passes through the air supply flow passage 3 in the case 100 and supplied to the room through the outlet 120.

There is an air circulation flow passage 5 in the case 100 for making the room and the air supply flow passage 3 in the case 100 in communication. The air circulation flow passage introduces the room air into the case 100, and returns to the room again. For an example, such an air circulation flow passage includes the first inlet 110 in the underside surface of the case 100, and the outlet 120 in the front 105 and the second side 107 of the case 100. The air circulating flow passage 5 meets with the air supply flow passage 3 at an inside of the case 100. Accordingly, both the room air introduced into the case 100 through the air circulation flow passage 5 and the outdoor air introduced into the case 100 through the air supply flow passage 3 is supplied to the room through the outlet 120.

Inside of the case 100, there is a fan unit 300 for supplying the air introduced into the case 100 through the main flow passage 1 or the air circulation flow passage 5 to the room. The fan unit 300 supplies the outdoor air introduced into the air supply flow passage 3 in the case 100 through the main flow passage 1 connected to the case 100 to the room, or returns the room air introduced into the case 100 through the first inlet 110 in the underside surface of the case 100 to the room, again. The fan unit 300 includes, for an example, a turbofan 310 for drawing air in an axial direction and discharging the air in a radial direction, and a fan motor 320 for driving the turbofan 310. The application of the turbofan 310 enables, not only to make the case compact, but also to enhance a fan efficiency.

The case 100 may further be provided with an air guide 400 for separating the air supply flow passage 3 from the air discharge flow passage 5. The air guide 400 in the case 100 on one side thereof separates the first inlet 110 from the second inlet 150. According to this, the air guide 400 guides outdoor air introduced into the case 100 through the air supply duct 210 to the outlet 120, and the room air introduced into the case 100 through the second inlet 150 to the discharge duct 220.

In the meantime, as described before, in a case the ventilating system is operated in an air cleaning mode by using outdoor air only in a state the main flow passage 1, of which structure enables only air supply, but not air discharge, is connected to the case 100, the air guide 400 may not be provided.

The air circulating flow passage 5 has at least one louver 111 mounted therein for opening/closing the air circulating flow passage 5. The louver 111 opens the first inlet 110, selectively. For an example, in a case of the air cleaning mode by using outdoor air only, the louver 111 is operated to close the first inlet 110, to prevent room air from being introduced into the case 110 through the first inlet 110, and in a case of the air cleaning mode by using indoor air only, the louver is operated, to open the first inlet 110, for introducing room air into the case 100 through the first inlet 110.

The air supply flow passage 3 may have an air supply damper 510 mounted therein for opening/closing the air supply flow passage 3. The air supply damper 510 is provided to open/close, for an example, the first port 130, so that the first port 130 is opened when the ventilating system introduces outdoor air into the room through the air supply flow passage 3, and the first port 130 is closed when the ventilating system circulates room air by using the air circulating flow passage 5.

The ventilating system may have a guide vane 121 provided to the outlet 120 for controlling a direction of air discharged to the room through the outlet 120.

There may be an air cleaning member 600 provided in the case 100. The air cleaning member 600 is mounted, for an example, under the turbofan 310, for cleaning outdoor air introduced into the case 100 through the air supply duct 210, and room air introduced into the case 100 through the first inlet 110. The air cleaned in the case 100 is supplied to the room through the outlet 120. Therefore, once the air cleaning member 600 is provided, the ventilating system of the present invention can supply clean air to the room in both cases when the ventilating system ventilates the room, or circulates the room air.

The air cleaning member 600 includes a high efficiency dust filter 610, optical catalyst 620, and active carbon 630. The high efficiency dust filter 610 is provided for filtering dust from polluted room air, and optical catalyst 620 and the active carbon 630, materials both having powerful adsorptivity, are provided for removing fine odor particles and the like from air. As the high efficiency dust filter 610, an HEPA (High Efficiency Particulate Arrestor) or an ULPA (Ultra Low Penetration Absolute) may be used. The HEPA has a cleaning capability of removing 99.97% of particles, such as dust, bacteria, virus of a size equal to or greater than 0.3µm, and the ULPA has a capability of removing 99.999% of particles, such as fine particle, virus, bacteria, dandruff, fungus, pollen, radon decay products, various smokes, and so on of a 0.01 ~ 0.1 µm size.

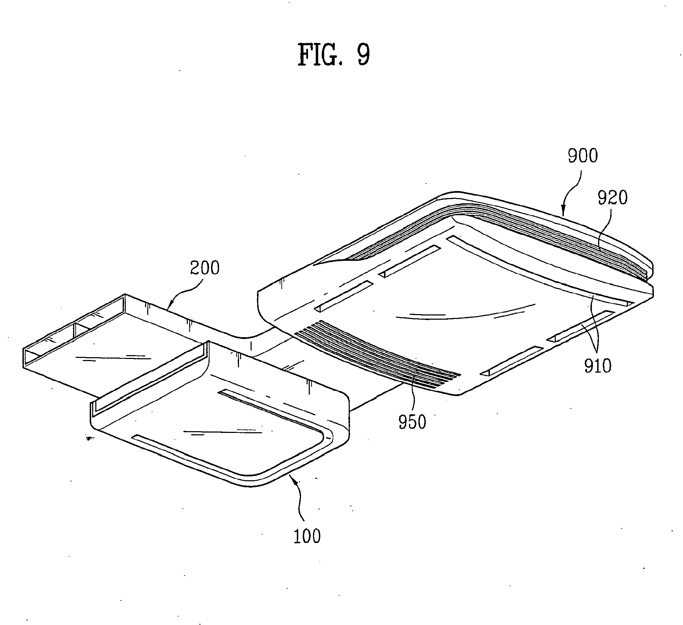

In the meantime, referring to FIG. 9, in the ventilating system in accordance with the first preferred embodiment of the present invention, a 3-way discharge ventilating device may be connected to the main flow passage 1. The 3-way discharge ventilating device, having three outlets 920, is connected to the main flow passage 1 of the ventilating system of the present invention and installed in other room.

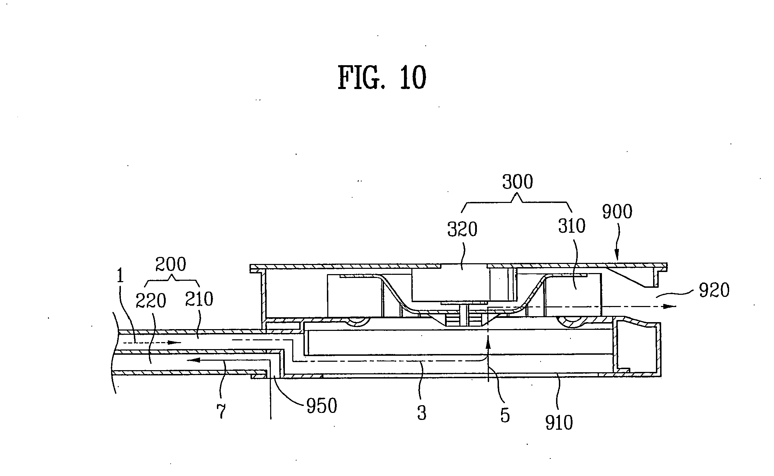

In more detail, referring to FIGS. 9 and 10, the 3-way discharge ventilating device includes a case 900 having outlets 920, for an example, in a front and side surfaces, a first inlet 910 for drawing room air and discharging to the room again, and a second inlet 950 for drawing room air and discharging to an outside of the room, an air supply flow passage 3 in the case 900 connected to the main flow passage 1 for supplying outdoor air through the outlets 920, an air discharge flow passage 7 in the case 900 connected to the main flow passage 1 for discharging room air to an outside of the room through the second inlet 950, an air circulating flow passage 5 in the case 900 for re-supplying room air drawn through the first inlet 910 to the room, and a fan unit 300 in the case 100 for forced suction of outdoor air and room air. The main flow passage 1 has an air supply duct 210 connected to the air supply flow passage 3 and an air discharge duct 220 connected to the air discharge flow passage 7.

Therefore, one portion of outdoor air supplied through the main flow passage 1 may be supplied to the case 100 of the ventilating system, and the other portion may be supplied to the case 900 of the 3-way discharge ventilating device through the main flow passage 1.

The foregoing ventilating system in accordance with a first preferred embodiment of the present invention is operative in a first operation mode for cleaning room air while circulating the room air, and a second operation mode for ventilating the room by introducing outdoor air into the room and discharging room air to an outside of the room. The operation of the ventilating for each of the operation modes will be described, with reference to FIGS. 7 and 8.

Referring to FIG. 7, in the first operation mode, the air supply damper 510 closes the first port 130, and the louver 111 opens the first inlet 110.

Then, the turbofan 310 in the case 100 is put into operation, for making polluted room air to flow to the air circulating flow passage in the case 100 through the first inlet 110 in an underside surface of the case 100. The polluted room air flowed to the air circulating flow passage in the case 100 passes through the air cleaning member 600 and the turbofan 310, flows to an upper space of the case 100, and supplied to the room through the outlet 120. In this instance, since the dust collecting filter 610, the photo catalyst 620, and the active carbon 630 of the air cleaning member 600 remove foreign matters from the polluted room air, the cleaned air can be supplied to the room. Since the air supply damper 510 closes the first port 130 during above steps, the outdoor air can not be introduced into the case 100, and only the room air is introduced into, and cleaned at the case 100, and discharged to the room. The ventilating system cleans room air while circulating the room air continuously.

Next, referring to FIG. 8, in the second operation mode of the ventilating system having the main flow passage 1 enabling air supply and discharge provided thereto, the air supply damper 510 opens the first port 130, and the louver 111 closes the first inlet 110. The air discharge damper 520 opens the first inlet 170.

Upon putting the turbofan 310 in the case 100 into operation, outdoor air flows through the air supply duct 210 of the main flow passage 1, and introduced into the case 100. The outdoor air introduced into the case 100 flows along the air supply flow passage 3. The outdoor air flowing through the air supply flow passage 3 passes through, and cleaned at the air cleaning member 600, and supplied to the room through the outlet 120. As described before, since the louver 111 closes the first inlet 110 during above steps, the room air is not introduced into the case 100 through the first inlet 110.

In the meantime, since the air discharge fan 740 is in operation, room air is introduced into the case 100 through the second inlet 150, and flows along the air discharge flow passage 7. Since the first inlet 110 and the second inlet 150 are separated by the air guide 400, the room air introduced into the case 100 through the second inlet 150 is not mixed with the outdoor air introduced into the case 100 through the air supply duct 210. The room air introduced into the case 100 through the second inlet 150, and flows along the air discharge flow passage 5 is discharged through the second port 170 and the air discharge duct 220. Therefore, the ventilating system supplies outdoor air and polluted room air in cleaned states, and discharges polluted room air to an outside of the room, to make the room more comfortable.

In the meantime, in the second operation mode, only air supply can be made depending on an air state of the room by stopping the air discharge fan 740, to stop air discharge from the room to an outside of the room.

In the meantime, though a case when the outdoor air supplied to the main flow passage 1 is supplied to the ventilating system in the first, and second operation modes, if a portion of the outdoor air is introduced into the case 900 of the 3-way discharge ventilating device described before through the main flow passage 1, the 3-way discharge ventilating device can be operated in the first, or second operation mode together with the ventilating system.

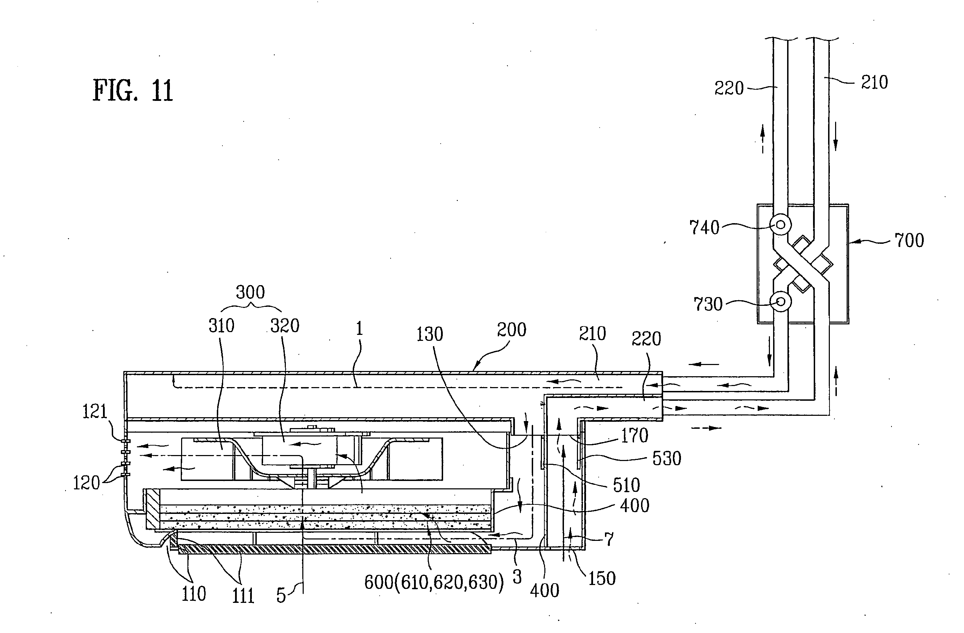

FIG. 11 illustrates a section of the ventilating system in accordance with a second preferred embodiment of the present invention, showing an air flow when the ventilating system is operating in a second operation mode.

Because the ventilating system in accordance with a second preferred embodiment of the present invention has a system similar to the ventilating system in accordance with a first preferred embodiment of the present invention, detailed description will be omitted. However, the ventilating system in accordance with a second preferred embodiment of the present invention includes a main flow passage 1 having an air supply duct 210 and an air discharge duct 220, and a heat exchanger 700 provided at an outdoor portion where the air supply duct 210 and the air discharge duct 220 cross, for making outdoor air supplied to the room, and the room air discharged to an outside of the room to heat exchange indirectly.

The ventilating system further includes an air supply fan 730 provided in the air supply duct 210 to assist operation of the turbofan 310, for enhancing air supply efficiency.

The ventilating system further includes an air discharge fan 740 provided in the air discharge duct 220 for discharging room air to an outside of the room.

In the meantime, the case is provided with an air cleaning member 600 having a high efficiency dust filter 610, photo catalyst 620, and active carbon in the case 100. Because the operation of the foregoing ventilating system in accordance with a preferred embodiment of the present invention is similar to the first embodiment, description of the operation will be omitted, except the heat exchanger 700 is operated selectively, to make the room air flowing through the air supply duct 210 and the air discharge duct 220 heat exchange indirectly. Therefore, the outdoor air introduced into the room in the second operation mode is supplied to the room after heated or cooled by the room air discharged to an outside of the room, sharp change of the room air can be prevented.

As has been described, the ventilating system of the present invention can carry out both ventilation and cleaning of room air by using one unit, permitting to reduce an expense for purchasing ventilating and air cleaning equipment, and to vary an installation configuration according to a wall structure of the room and a height of flat and ceiling. Accordingly, the ventilating system of the present invention permits to reduce a flat height, to reduce an initial construction cost, and to increase an number of stories for the same height of building, to maximize a spatial efficiency. In addition to this, the air cleaning member and the heat exchanger in the ventilating system permits to provide air of an appropriate temperature to the room in winter or summer, and a comfortable room environment by providing cleaned air, always.

The turbofan permits to prevent reduction of air supply rate caused by a pressure loss even if the high efficiency dust filter is used. The use of main flow passage for introduction of outdoor air or discharge of room air permits to install different units in each of the rooms.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A ventilating system comprising:
a main flow passage in communication with an outside of a room, for supplying outdoor air to the room, or discharging room air to an outside of the room;
at least one case having an inlet and an outlet in communication with the room, and connected to the main flow passage;
an air supply flow passage connected to the main flow passage for supplying outdoor air to the room through the outlet;
an air circulating flow passage connecting the room to the air supply flow passage in the case, for drawing room air through the inlet and supplying the room air to the room again; and
a fan unit in the case for supplying the outdoor air introduced into the case through the air supply flow passage to the room, or supplying the room air introduced into the case through the air circulating flow passage to the room, again.

2. The ventilating system as claimed in claim 1, wherein the case has a shape of a thin hexahedron, and is installed at a corner of a ceiling.

3. The ventilating system as claimed in claim 1, wherein the case has one side and a rear in close contact with room walls at a corner of the room, and the other side and a front exposed to the room provided with the outlet.

4. The ventilating system as claimed in claim 1, wherein the case is in the room, and the main flow passage is in the ceiling in a state the main flow passage is connected to an upper surface of the case.

5. The ventilating system as claimed in claim 1, wherein the main flow passage is provided to a corner of the ceiling in a state the main flow passage passes through the wall, and the case is in the room in a state the case is connected to an underside of the main flow passage.

6. The ventilating system as claimed in claim 1, wherein two or more than two cases are provided, and each of the cases is provided in rooms different from each other.

7. The ventilating system as claimed in claim 1, wherein the main flow passage includes;
a first port at a portion the air supply flow passage starts in the case, and
a main duct connected to the first port for guiding outdoor air to the air supply flow passage.

8. The ventilating system as claimed in claim 1, wherein the main duct includes an elbow passed through the corner of the room or an inside of the ceiling opposite to the corner.

9. The ventilating system as claimed in claim 1, wherein the case includes;
a first inlet in an underside surface of the case for drawing room air for re-supplying to the room,
a second inlet in an underside surface of the case for drawing room air to discharge to an outside of the room,
outlets in the front and the other side of the case for discharging air introduced into the case to the room, and
an air guide for separating the outdoor air being introduced into the room from room air being discharged to an outside of the room.

10. The ventilating system as claimed in claim 9, wherein the main flow passage includes;
a first port in an upper surface of the case,
an air supply duct connected to the first port for guiding outdoor air to the case,
a second port in the upper surface of the case, and
an air discharge duct connected to the second port for guiding room air introduced into the case to an outside of the room.

11. The ventilating system as claimed in claim 9, further comprising an air discharge flow passage in the case having one end connected to the air discharge duct for guiding the room air introduced into the second inlet to the air discharge duct.

12. The ventilating system as claimed in claim 9, further comprising an air supply damper provided to the air supply duct for selective cut off of an air flow through the air supply duct.

13. The ventilating system as claimed in claim 9, further comprising an air discharge damper provided to the air discharge duct for selective cut off of an air flow through the air discharge duct.

14. The ventilating system as claimed in claim 1, wherein the fan unit includes a turbofan for drawing outdoor air and polluted room air in an axial direction and discharging in a radial direction.

15. The ventilating system as claimed in claim 1, further comprising a louver in the air circulating flow passage for opening/closing the inlet.

16. The ventilating system as claimed in claim 1, further comprising a 3-way discharge ventilating device connected to the main flow passage for making air supply and aid discharge at the same time.

17. The ventilating system as claimed in claim 16, wherein the 3-way discharge ventilating device includes;
a case connected to the other end of the main flow passage, and provided in other room, having outlets in a front and opposite sides, and a first inlet and a second inlet in an underside for drawing the room air,
an air supply flow passage in the case connected to the main flow passage for supplying outdoor air to the room through the outlet,
an air discharge flow passage in the case, and connected to the main flow passage, for discharging room air to an outside of room through an inlet,
an air circulating flow passage in the case for re-supplying room air to the room, and
a fan unit in the case for forced suction of the outdoor air and the room air.

18. The ventilating system as claimed in claim 17, wherein the main flow passage includes;
an air supply duct connected to the air supply flow passage, and
an air discharge duct connected to the air discharge flow passage.

19. The ventilating system as claimed in claim 1, further comprising an air cleaning member in the case for cleaning room air or outdoor air introduced into the case.

20. The ventilating system as claimed in claim 19, wherein the air cleaning member includes a high efficiency dust filter, photo-catalyst, and active carbon in the case.

21. The ventilating system as claimed in claim 20, wherein the high efficiency dust filter includes an HEPA (High Efficiency Particulate Arrestor) which can filter microbes and particles of a size equal to or greater than 0.3 µm.

22. The ventilating system as claimed in claim 20, wherein the high efficiency dust filter includes an ULPA (Ultra Low Penetration Absolute) which can filter microbes and particles of a 0.01 ~ 0. 1 µm size.

23. A ventilating system comprising:
a main duct having an air supply duct for supplying outdoor air to a room, and an air discharging duct for discharging room air to an outside of the room;
at least one case in the room connected to the main duct, the case having a first inlet for drawing the room air for re-supplying the room air to the room, a second inlet for drawing the room air for discharging the room air to an outside of the room, and an outlet for discharging the outdoor air to the room;
an air guide in the case for separating the outdoor air supplied to the case, and the room air drawn into the case; and
a fan unit in the case for supplying the outdoor air to the room, or introducing room air into the case, and therefrom, to the room.

24. The ventilating system as claimed in claim 23, further comprising a heat exchanger provided to an outdoor portion where the air supply duct and the air discharge duct cross for making the outdoor air being supplied to the room and the room air being discharged to an outside of the room to heat exchange, indirectly.

25. The ventilating system as claimed in claim 24, further comprising an air supply fan in the air supply duct for drawing the outdoor air.

26. The ventilating system as claimed in claim 24, further comprising an air discharge fan in the air discharge duct for discharging the room air.

27. The ventilating system as claimed in claim 23, wherein the case includes;
an air supply flow passage in the case connected to the air supply duct for guiding the outdoor air to the outlet through an underside of the fan unit,
an air circulating flow passage in the case connected to the air supply flow passage for drawing the room air into the case through the first inlet and supplying to the room again, and
an air discharge flow passage in the case connected to the air discharge duct for drawing the room air through the second inlet and guiding the room air to the air discharge duct.

28. The ventilating system as claimed in claim 23, further comprising an air cleaning member in the case for cleaning the room air, or the outdoor air introduced into the case.
